# EUROPEAN PATENT SPECIFICATION

(11) **EP 3 988 821 B1**
(45) Date of publication and mention of the grant of the patent: **30.10.2024**
(21) Application number: 20827077.7
(22) Date of filing: 13.05.2020
(51) Int. Cl.: F16J 15/3232, F16J 15/3244

(54) **SEALING DEVICE**
DICHTUNGSVORRICHTUNG
DISPOSITIF D'ÉTANCHÉITÉ

(30) Priority: 20.06.2019 JP 2019114284
(43) Date of publication of application: 27.04.2022
(73) Proprietor: NOK Corporation, Tokyo 105-8585 (JP)
(72) Inventor: ABE, Junichi, Fukushima-shi, Fukushima 960-1193 (JP); ITO, Saki, Fukushima-shi, Fukushima 960-1193 (JP)
(74) Representative: TBK
(86) International application number: PCT/JP2020/019133
(87) International publication number: WO 2020/255591

(56) References cited:
- EP-A1- 1 239 197
- EP-A1- 1 239 197
- JP-A- 2000 110 946
- JP-A- 2004 190 844
- JP-A- 2017 026 072
- JP-A- H11 173 239
- JP-U- H0 530 638
- JP-U- H0 673 547

## Description

### [Technical Field]

The present disclosure relates to a sealing device according to the preamble of claim 1 for sealing an annular gap between a shaft and a housing relatively rotating.

### [Background Art]

In a device such as a decelerator or the like, foreign substances such as abrasion powders of a gear and a bearing are mixed in a lubricant oil. It is known that a sealing device such as an oil seal used in the decelerator or the like is provided with an auxiliary lip in addition to a seal lip (main lip) for suppressing abrasion of the seal lip due to the foreign substances mixed in the lubricant oil. The auxiliary lip that is provided nearer to a sealed-fluid side than the main lip and configured to slide on a shaft can prevent the foreign substances from entering the main lip side. In such configuration, a grease is applied between the main lip and the auxiliary lip to prevent slide abrasion of the main lip.

However, if an application amount of the grease is insufficient, not only the foreign substances but also the sealed fluid such as lubricant oil or the like is prevented from entering the main lip side by the auxiliary lip and thus, the slide abrasion of the main lip may be accelerated.

EP 1 239 197 A1, JP H06- 73 547 U, JP H05- 30638 U, JP 2000- 110 946 A and JP 2004- 190 844 A respectively disclose a sealing device having the features of the preamble of claim 1.

### [Citation List]

### [Patent Literature]

[PTL 1]
   JP 2017- 026 072 A
[PTL 2]
   JP 2009- 052 705 A
[PTL 3]
   EP 1 239 197 A1
[PTL 4]
   JP H06- 73 547 U
[PTL 5]
   JP 2004- 190 844 A
[PTL 6]
   JP H05- 30638 U
[PTL 7]
   JP 2000- 110 946 A

### [Summary of Invention]

### [Technical Problem]

An object of the present disclosure is to further develop a sealing device according to the preamble of claim 1 such as to suppress slide abrasion of the main lip in the sealing device.

### [Solution to Problem]

This object is achieved by a sealing device having the features of claim 1. Advantageous further developments are defined in the dependent claims.

The sealing device of the present disclosure is a sealing device for sealing an annular gap between a shaft and a housing rotating relatively, the sealing device including:
a main lip slidable on the shaft; and
an auxiliary lip provided nearer to a sealed-fluid side than the main lip and slidable on the shaft, wherein
an inner surface of the auxiliary lip has a slanted surface of which diameter increases toward an opposite side to the sealed-fluid side from a lip distal end;
the slanted surface is provided with a plurality of protrusions with intervals in a circumferential direction, each of the protrusions being slidable on the shaft, on both sides of each of the protrusions being formed gaps, and the gaps connecting a region on the sealed-fluid side with a region on an opposite side thereto; and
a sliding surface of each of the plurality of protrusions is configured to be in parallel with the slanted surface in cross section by a plane containing a central axis of the sealing device in a state where an external force does not act on the auxiliary lip.

According to the present disclosure, the foreign substances contained in the sealed fluid can be prevented from entering the main lip side by the auxiliary lip. Since the gaps connecting the region on the sealed-fluid side with the region on the opposite side thereto are formed due to the protrusions, the sealed fluid enters the main lip side. As a result, slide abrasion of the main lip can be suppressed. The sliding surface of each of the plurality of protrusions is configured to be in parallel with the slanted surface constituting the inner surface of the auxiliary lip in the cross section by the plane containing the central axis of the sealing device in a state where an external force does not act on the auxiliary lip. This suppresses variation in manufacturing in the height of the protrusions with respect to the slanted surface.

The sealing device may have a first sealing device including the main lip; and
a second sealing device fixed by fitting to an inner surface of the first sealing device and including the auxiliary lip.

The main lip and the auxiliary lip may be provided integrally.

The sealing device may have a first sealing device including the main lip; and
a second sealing device fixed by fitting to an inner surface of a shaft hole of the housing and including the auxiliary lip.

### [Advantageous Effects of Invention]

As described above, the slide abrasion of the main lip can be suppressed.

### [Brief Description of Drawings]

[Fig. 1]

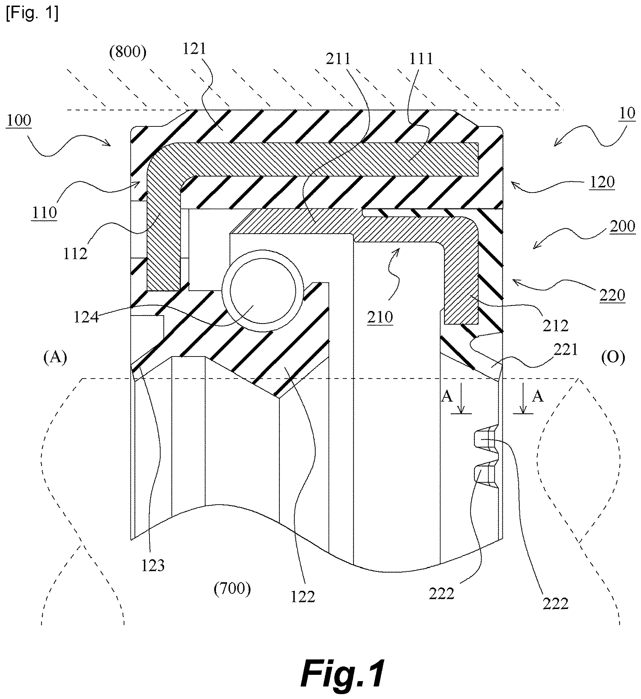

   Fig. 1 is a schematic sectional view of a sealing device according to the first embodiment of the present disclosure.
[Fig. 2]

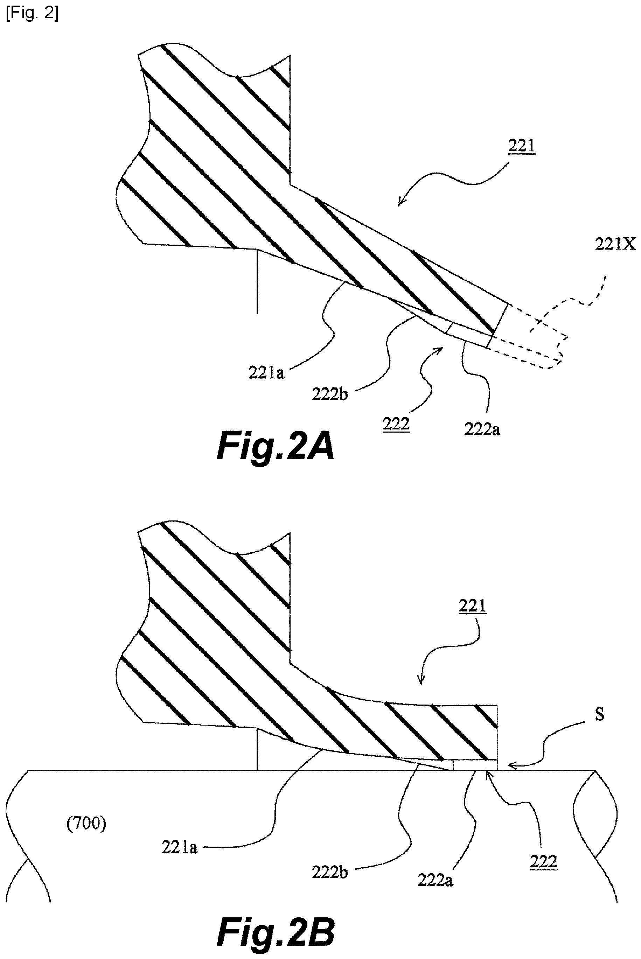

   Fig. 2 is an illustration of an auxiliary lip according to the first embodiment of the present disclosure.
[Fig. 3]

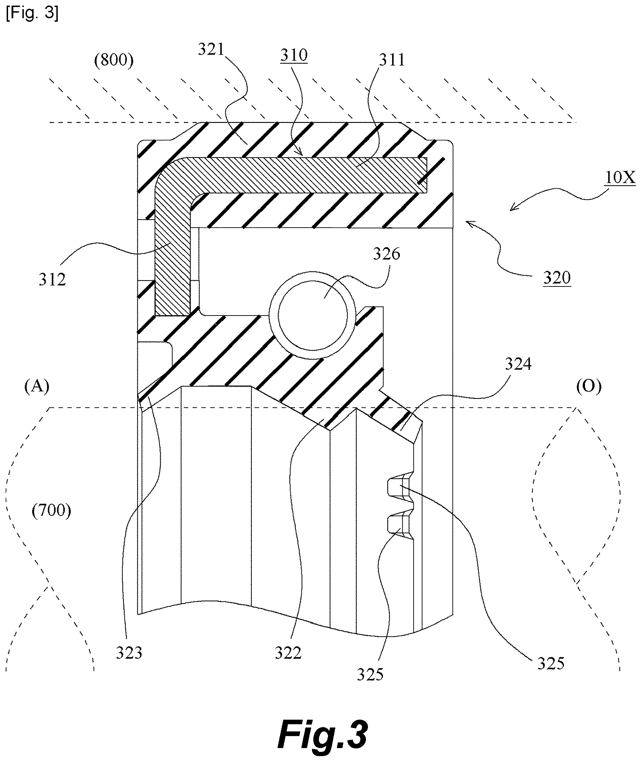

   Fig. 3 is a schematic sectional view of the sealing device according to the second embodiment of the present disclosure.
[Fig. 4]

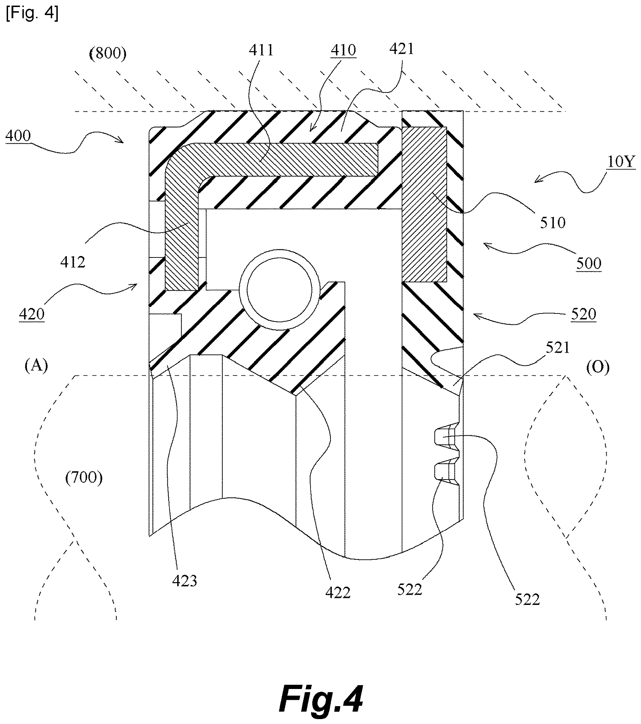

   Fig. 4 is a schematic sectional view of the sealing device according to the third embodiment of the present disclosure.

### [Description of Embodiments]

Hereinafter, embodiments for implementing the present disclosure will be described exemplarily in detail based on embodiments by referring to drawings. However, dimensions, materials, shapes, relative disposition and the like of components described in the embodiments are not intended to limit the scope of the present disclosure that is only limited by the scope of the appended claims.

### (Embodiment 1)

By referring to Figs. 1 and 2, a sealing device according to the first embodiment of the present disclosure will be described. Fig. 1 is a schematic sectional view of the sealing device according to the first embodiment of the present disclosure. The sealing device according to the present embodiment has a substantially rotationally symmetrical shape, and Fig. 1 illustrates a cross sectional view by a plane containing a central axis of the sealing device. Fig. 1 illustrates the sealing device in a state where an external force does not act on it, and in the figure, positions of the housing and the shaft when the sealing device is in use are indicated by dotted lines. Fig. 2 is an illustration of an auxiliary lip according to the first embodiment of the present disclosure. Fig. 2A is a cross sectional view indicated by AA in Fig. 1, and Fig. 2B is a cross sectional view illustrating the auxiliary lip in a state where the shaft is inserted into the sealing device.

### <Sealing structure>

A sealing structure using the sealing device as an oil seal according to the present embodiment will be now described. The sealing device 10 can be suitably used for sealing an annular gap between a shaft 700 and a housing 800 that are rotated relatively in a decelerator, a servomotor or the like. In the figure, a region on the right side is a sealed region in which a sealed fluid such as oil e.g. lubricant oil is sealed, while a region on the left side is an opposite region to the sealed region, which is an atmospheric region here. Hereinafter, the side to be the sealed region side in use, that is, the right side in Fig. 1, is called a "sealed-fluid side (O)", while the side to be the atmospheric region side, that is, the left side in Fig. 1, is called an "opposite side (A)". The sealing device 10 is fixed by fitting to an inner surface of a shaft hole of the housing 800. When the shaft 700 and the housing 800 are rotated relatively, the sealing device 10 remains stationary with respect to the housing 800, while sliding occurs between the sealing device 10 and the shaft 700.

### <Sealing device>

The sealing device 10 will be explained in more detail. The sealing device 10 has a first sealing device 100 fixed by fitting to the inner surface of the shaft hole of the housing 800 and a second sealing device 200 fixed by fitting to the inner surface of the first sealing device 100. The first sealing device 100 includes a reinforcing ring 110 and a seal body 120 made of a rubber-like elastic body provided integrally with the reinforcing ring 110. The first sealing device 100 is fabricated by molding the seal body 120 by insert molding with the reinforcing ring 110 as an insert part. The reinforcing ring 110 has a cylindrical portion 111 and an inward flange portion 112 provided on an end portion of the cylindrical portion 111 on the opposite side (A). The seal body 120 includes an outer seal portion 121, a main lip 122, and a dust lip 123. The outer seal portion 121 is configured to be in close contact with the inner surface of the shaft hole of the housing 800. The sealing device 10 is fixed by fitting to the inner surface of the shaft hole of the housing 800, preventing the sealed fluid from leaking from the gap between the sealing device 10 and the inner surface of the shaft hole of the housing 800. The main lip 122 and the dust lip 123 are both configured to be slidable on the outer surface of the shaft 700. The main lip 122 mainly functions to prevent the leakage of the sealed fluid. The main lip 122 has a garter spring 124 on the outer surface side of the main lip 122, the garter spring 124 pressing a distal end of the main lip 122 on the radially inward side onto the shaft 700. The dust lip 123 mainly functions to prevent foreign substances such as dusts from the outside from entering the sealed-fluid side (O).

The second sealing device 200 includes a reinforcing ring 210 and a seal body 220 made of a rubber-like elastic body provided integrally with the reinforcing ring 210. The second sealing device 200 is fabricated by molding the seal body 220 by insert molding with the reinforcing ring 210 as an insert part. The reinforcing ring 210 has a substantially cylindrical portion 211 and an inward flange portion 212 provided on an end portion of the substantially cylindrical portion 211 on the sealed-fluid side (O). The seal body 220 includes an auxiliary lip 221 slidable on the shaft 700. The second sealing device 200 is fixed by fitting to the inner surface of the first sealing device 100. The substantially cylindrical portion 211 of the reinforcing ring 210 in the second sealing device 200 is fixed by fitting to a portion of the seal body 120 in the first sealing device 100, the portion being located on the radially inward side of the cylindrical portion 111 of the reinforcing ring 110. The auxiliary lip 221 of the second sealing device 200 is provided nearer to the sealed-fluid side (O) than the main lip 122. The auxiliary lip 221 mainly functions to prevent the foreign substances such as metal powders contained in the sealed fluid from entering the main lip 122 side. The auxiliary lip 221 suppresses abrasion of the main lip 122. Thus, the product life of the main lip 122 can be extended.

Grease is applied to the inner surfaces of both the main lip 122 and the auxiliary lip 221 of the sealing device 10. This improves slidability between the main lip 122 and the shaft 700 and the slidability between the auxiliary lip 221 and the shaft 700.

### <Auxiliary lip>

The auxiliary lip 221 will be explained in more detail. The inner surface of the auxiliary lip 221 has a slanted surface 221a whose diameter increases from the lip distal end toward the opposite side (A) of the sealed-fluid side (O). The inner surface of the auxiliary lip 221 has, in addition to the slanted surface 221a, a slanted surface whose diameter increases from the lip distal end toward the sealed-fluid side (O). These slanted surfaces intersect each other substantially perpendicularly at an intersection portion, which corresponds to the lip distal end. The slanted surface 221a is provided with a plurality of protrusions 222 with intervals in the circumferential direction, each of the protrusions 222 being slidable on the shaft 700. Each of the protrusions 222 functions to form a gap S on both sides of each of the protrusions 222, that is, on both sides in the circumferential direction. The gap S connects a region on the sealed-fluid side (O) with a region on the opposite side (A) as seen in Fig. 2B. Near the distal end of the slanted surface 221a in the auxiliary lip 221, portions other than the gap S formed on the both sides of each of the protrusions 222 are in slidable contact with the shaft 700.

A sliding surface 222a of each of the plurality of protrusions 222 is configured to be in parallel with the slanted surface 221a in cross section by the plane containing the central axis of the sealing device 10 in a state where the external force does not act on the auxiliary lip 221. Note that the central axis of the sealing device 10 can also be referred to as a central axis of the second sealing device 200 in the present embodiment. The inner surface of each of the protrusions 222 has, in addition to the sliding surface 222a, a slanted surface 222b by which the height of the protrusion 222 decreases toward a base part of the auxiliary lip 221 from the sliding surface 222a.

The seal body 220 of the second sealing device 200 is fabricated by the insert molding as described above. After the insert molding is done and the insert-molded product is taken out of a die, a part of the molded product on the distal end side with respect to a part to be the auxiliary lip 221 is cut off and removed. The part to be removed is indicated as a removed part 221X by a dotted line in Fig. 2A. The height of the protrusions 222, that is, the height from the slanted surface 221a to the sliding surface 222a, will be constant even if there are variations in positions at which the part 221X is cut off and removed, because the sliding surface 222a is configured to be in parallel with the slanted surface 221a in the cross section by the plane containing the central axis of the sealing device 10. Therefore, the variations in the width of the gaps S formed by the protrusions 222 can be suppressed.

### <Advantages of the sealing device according to the present embodiment>

The sealing device 10 according to the present embodiment can prevent the foreign substances contained in the sealed fluid from entering the main lip 122 side due to the auxiliary lip 221. At the same time, the sealed fluid is allowed to enter the main lip 122 side due to the gaps S connecting the region on the sealed-fluid side (O) with the region on the opposite side (A) formed by the protrusions 222. This suppresses slide abrasion of the main lip in a case the application amount of the grease is insufficient.

The sliding surface 222a of each of the plurality of protrusions 222 is configured to be in parallel with the slanted surface 221a constituting the inner surface of the auxiliary lip 221 in the cross section by the plane containing the central axis of the sealing device 10 in the state where an external force does not act on the auxiliary lip 221. This suppresses the variation in the height of the protrusions 222 with respect to the slanted surface 221a in manufacture. Thus, the variation in the width of the gaps S formed by the protrusions 222 can be suppressed.

Note that the number, arrangement, and height of the protrusions 222 can be appropriately set in view of usage environment. In the present embodiment, a plurality of sets of protrusions 222 are provided with intervals in the circumferential direction, each set consisting of two protrusions 222. For example, four sets, eight in total, of protrusions 222 may be provided at 90-degree intervals in the circumferential direction, or three sets, six in total, of protrusions 222 may be provided at 120-degree intervals in the circumferential direction.

### (Embodiment 2)

Fig. 3 illustrates the second embodiment of the present disclosure. In the first embodiment, the auxiliary lip is provided in the second sealing device that is fixed by fitting to the inner surface of the first sealing device. In the present embodiment, however, another structure will be described, in which a main lip and an auxiliary lip are integrally provided. Fig. 3 is a schematic sectional view of the sealing device according to the second embodiment of the present disclosure. The sealing device according to the present embodiment has a substantially rotationally symmetrical shape. Fig. 3 illustrates the sealing device in a sectional view by a plane containing the central axis of the sealing device. Fig. 3 illustrates the sealing device in a state where an external force does not act on it, where positions of the housing and the shaft when the sealing device is in use are indicated by dotted lines. Since a sealing structure using a sealing device 10X according to the present embodiment is similar to that of the first embodiment, the explanation will be omitted.

The sealing device 10X includes a reinforcing ring 310 and a seal body 320 made of a rubber-like elastic body provided integrally on the reinforcing ring 310. The sealing device 10X is fabricated by molding the seal body 320 by insert molding with the reinforcing ring 310 as an insert component. The reinforcing ring 310 is constituted by a cylindrical portion 311 and an inward flange portion 312 provided on an end portion of the cylindrical portion 311 on the opposite side (A) of the sealed-fluid side (O). The seal body 320 includes an outer seal portion 321, a main lip 322, and a dust lip 323. The outer seal portion 321 is configured to be in close contact with the inner surface of the shaft hole of the housing 800. The sealing device 10X is fixed by fitting to the inner surface of the shaft hole of the housing 800, preventing the sealed fluid from leaking from the gap between the sealing device 10X and the inner surface of the shaft hole of the housing 800. The main lip 322 and the dust lip 323 are both configured to be slidable on the outer surface of the shaft 700. The main lip 322 mainly functions to prevent the leakage of the sealed fluid. The main lip 322 has a garter spring 326 on the outer surface side of the main lip 322, the garter spring 326 pressing the distal end of the main lip 322 on a radially inward side onto the shaft 700. The dust lip 323 mainly functions to prevent the foreign substances such as dusts from the outside from entering the sealed-fluid side (O).

In the present embodiment, an auxiliary lip 324 is provided nearer to the sealed-fluid side (O) than the main lip 322, and the main lip 322 and the auxiliary lip 324 are provided integrally. The auxiliary lip 324 mainly functions to prevent the foreign substances such as metal powders contained in the sealed fluid from entering the main lip 322 side. The auxiliary lip 324 suppresses abrasion of the main lip 322, and the product life of the main lip 322 can be extended.

Grease is applied to the inner surfaces of both the main lip 322 and the auxiliary lip 324 of the sealing device 10X. This improves the slidability between the main lip 322 and the shaft 700 and the slidability between the auxiliary lip 324 and the shaft 700.

The auxiliary lip 324 is provided with, similarly to the first embodiment, a plurality of protrusions 325 with intervals in the circumferential direction, each of the protrusions 325 being slidable on the shaft 700. The structure, effects, and manufacturing methods and the like of the auxiliary lip 324 and the protrusions 325 are similar to the auxiliary lip 221 and the protrusions 222 of the first embodiment, of which explanation will be omitted.

The sealing device 10X according to the present embodiment configured as above achieves the similar effects to the first embodiment.

### (Embodiment 3)

Fig. 4 illustrates the third embodiment of the present disclosure. In the first embodiment, the second sealing device having the auxiliary lip is fixed by fitting to the inner surface of the first sealing device. In the present embodiment, however, another structure will be described in which a second sealing device having an auxiliary lip is fixed by fitting to an inner surface of a shaft hole of a housing. Fig. 4 is a schematic sectional view of the sealing device according to the third embodiment of the present disclosure. The sealing device according to the present embodiment has a substantially rotationally symmetrical shape. Fig. 4 illustrates the sealing device in a sectional view by a plane containing a central axis of the sealing device is illustrated. Fig. 4 illustrates the sealing device in a state where an external force does not act on it, where positions of the housing and the shaft when the sealing device is in use are indicated by dotted lines. Since a sealing structure using a sealing device 10Y according to the present embodiment is similar to that of the first embodiment, the explanation will be omitted.

The sealing device 10Y is constituted by a first sealing device 400 fixed by fitting to the inner surface of the shaft hole of the housing 800 and a second sealing device 500 fixed by fitting to the inner surface of the shaft hole of the housing 800. The first sealing device 100 includes a reinforcing ring 410 and a seal body 420 made of a rubber-like elastic body provided integrally with the reinforcing ring 410. The first sealing device 400 is fabricated by molding the seal body 420 by insert molding with the reinforcing ring 410 as an insert component. The reinforcing ring 410 is constituted by a cylindrical portion 411 and an inward flange portion 412 provided on an end portion of the cylindrical portion 411 on the opposite side (A) of the sealed-fluid side (O). The seal body 420 includes an outer seal portion 421, a main lip 422, and a dust lip 423. The structures, the roles and the like of the outer seal portion 421, the main lip 422, and the dust lip 423 are similar to the outer seal portion 121, the main lip 122, and the dust lip 123 described in the first embodiment, of which explanation will be omitted.

The second sealing device 500 includes a reinforcing ring 510 and a seal body 520 made of a rubber-like elastic body provided integrally with the reinforcing ring 510. The second sealing device 500 is fabricated by molding the seal body 520 by insert molding with the reinforcing ring 510 as an insert component. The reinforcing ring 510 is constituted by an annular member. The seal body 520 includes an auxiliary lip 521 slidable on the shaft 700. The second sealing device 500 configured is fixed by fitting to the inner surface of the shaft hole of the housing 800 to be adjacent to the first sealing device 100 nearer to the sealed-fluid side (O) than the first sealing device 100. Thus, the auxiliary lip 521 of the second sealing device 500 is provided nearer to the sealed-fluid side (O) than the main lip 422. The auxiliary lip 521 mainly functions to prevent the foreign substances such as metal powders contained in the sealed fluid from entering the main lip 422 side. The auxiliary lip 521 suppresses abrasion of the main lip 422, and thus the product life of the main lip 422 can be extended.

Grease is applied to the inner surfaces of both the main lip 422 and the auxiliary lip 521 of the sealing device 10Y. This improves the slidability between the main lip 422 and the shaft 700 and the slidability between the auxiliary lip 521 and the shaft 700.

The auxiliary lip 521 is provided with, similarly to the first embodiment, a plurality of protrusions 522 with intervals in the circumferential direction, each of the protrusions 522 being slidable on the shaft 700. The structure, effects, and manufacturing methods and the like of the auxiliary lip 521 and the protrusions 522 are similar to the auxiliary lip 221 and the protrusions 222 of the first embodiment, of which explanation will be omitted.

The sealing device 10Y according to the present embodiment configured as above achieves the similar effects to the first embodiment.

### [Reference Signs List]

10, 10X, 10Y Sealing device
110, 310, 410 Reinforcing ring
111, 311, 411 Cylindrical portion
112, 312, 412 Inward flange portion
120, 320, 420 Seal body
121, 321, 421 Outer seal portion
122, 322, 422 Main lip
123, 323, 423 Dust lip
124 Garter spring
210, 510 Reinforcing ring
211 Substantially cylindrical portion
212 Inward flange portion
220, 520 Seal body
221, 521 Auxiliary lip
221X Removed portion
221a Slanted surface
222, 522 Protrusion
222a Slide surface
222b Slanted surface
324 Auxiliary lip
325 Protrusion
326 Garter spring
700 Shaft
800 Housing
S gap

## Claims

1. A sealing device (10, 10X, 10Y) for sealing an annular gap between a shaft (700) and a housing (800) rotating relatively, the sealing device (10, 10X, 10Y) comprising:
a main lip (122, 322, 422) slidable on the shaft (700); and
an auxiliary lip (221, 324, 521) provided nearer to a sealed-fluid side (O) than the main lip (122, 322, 422), and slidable on the shaft (700), wherein
an inner surface of the auxiliary lip (221, 324, 521) has a slanted surface (221a) of which a diameter increases toward an opposite (A) side to the sealed-fluid side (O) from a lip distal end; and
the slanted surface (221a) is provided with a plurality of protrusions (222, 325, 522) with intervals in a circumferential direction, each of the protrusions (222, 325, 522) being slidable on the shaft (700), on both sides of each of the protrusions (222, 325, 522) being formed gaps (S), and the gaps (S) connecting a region on the sealed-fluid side (O) with a region on an opposite side (A) thereto;
**characterized in that**
a sliding surface (222a) of each of the plurality of protrusions (222, 325, 522) is configured to be in parallel with the slanted surface (221a) in cross section by a plane containing a central axis of the sealing device (10, 10X, 10Y) in a state where an external force does not act on the auxiliary lip (221, 324, 521).

2. The sealing device (10) according to claim 1, further comprising:
a first sealing device (100) including the main lip (122); and
a second sealing device (200) fixed by fitting to an inner surface of the first sealing device (100) and including the auxiliary lip (221).

3. The sealing device (10X) according to claim 1, wherein
the main lip (322) and the auxiliary lip (324) are provided integrally.

4. The sealing device (10Y) according to claim 1, further comprising:
a first sealing device (400) including the main lip (422); and
a second sealing device (500) configured to be fixed by fitting to an inner surface of a shaft hole of the housing (800) and including the auxiliary lip (521).

## Patentansprüche

1. Dichtungsvorrichtung (10, 10X, 10Y) zum Dichten eines ringförmigen Spalts zwischen einer Welle (700) und einem Gehäuse (800), die sich relativ drehen, wobei die Dichtungsvorrichtung (10, 10X, 10Y) aufweist:
eine Hauptlippe (122, 322, 422), die an der Welle (700) gleitbar ist; und
eine Hilfslippe (221, 324, 521), die näher bei einer Seite (O) eines gedichteten Fluids vorgesehen ist als die Hauptlippe (122, 322, 422) und an der Welle (700) gleitbar ist, wobei
eine Innenfläche der Hilfslippe (221, 324, 521) eine schräge Fläche (221a) hat, deren Durchmesser sich in Richtung einer zu der Seite (O) eines gedichteten Fluids entgegensetzten Seite (A) von einem Lippendistalende erhöht; und
die schräge Fläche (221a) mit einer Vielzahl Vorsprünge (222, 325, 522) mit Abständen in einer Umfangsrichtung versehen ist, wobei jeder der Vorsprünge (222, 325, 522) an der Welle (700) gleitbar ist, an beiden Seiten eines jeden der Vorsprünge (222, 325, 522) Spalte (S) ausgebildet sind, und die Spalte (S) einen Bereich an der Seite (O) eines gedichteten Fluids mit einem Bereich an einer dazu entgegengesetzten Seite (A) verbinden;
**dadurch gekennzeichnet, dass**
eine Gleitfläche (222a) eines jeden der Vielzahl Vorsprünge (222, 325, 522) dazu gestaltet ist, in einem Querschnitt durch eine Ebene, die eine Zentralachse der Dichtungsvorrichtung (10, 10X, 10Y) enthält, mit der schrägen Fläche (221a) parallel zu sein, in einem Zustand, bei dem eine äußere Kraft nicht auf die Hilfslippe (221, 324, 521) wirkt.

2. Dichtungsvorrichtung (10) gemäß Anspruch 1, die ferner aufweist:
eine erste Dichtungsvorrichtung (100), die die Hauptlippe (122) umfasst; und
eine zweite Dichtungsvorrichtung (200), die durch Passen an eine Innenfläche der ersten Dichtungsvorrichtung (100) fixiert ist und die Hilfslippe (221) umfasst.

3. Dichtungsvorrichtung (10X) gemäß Anspruch 1, wobei
die Hauptlippe (322) und die Hilfslippe (324) einstückig vorgesehen sind.

4. Dichtungsvorrichtung (10Y) gemäß Anspruch 1, die ferner aufweist:
eine erste Dichtungsvorrichtung (400), die die Hauptlippe (422) umfasst; und
eine zweite Dichtungsvorrichtung (500), die dazu gestaltet ist, durch Passen an eine Innenfläche eines Wellenlochs des Gehäuses (800) fixiert zu sein, und die Hilfslippe (521) umfasst.

## Revendications

1. Dispositif d'étanchéité (10, 10X, 10Y) pour rendre étanche un espace annulaire entre un arbre (700) et un boîtier (800) en rotation relative, le dispositif d'étanchéité (10, 10X, 10Y) comprenant :
une lèvre principale (122, 322, 422) qui peut coulisser sur l'arbre (700) ; et
une lèvre auxiliaire (221, 324, 521) qui est prévue plus près d'un côté de fluide hermétique (O) que la lèvre principale (122, 322, 422) et peut coulisser sur l'arbre (700), dans lequel
une surface intérieure de la lèvre auxiliaire (221, 324, 521) a une surface inclinée (221a) dont un diamètre augmente vers un côté opposé (A) au côté de fluide hermétique (O) à partir d'une extrémité distale de lèvre ; et
la surface inclinée (221a) est pourvue d'une pluralité de protubérances (222, 325, 522) à intervalles dans une direction circonférentielle, chacune des protubérances (222, 325, 522) pouvant coulisser sur l'arbre (700), des espaces (S) étant formées des deux côtés de chacune des protubérances (222, 325, 522), et les espaces (S) reliant une région du côté de fluide hermétique (O) à une région d'un côté opposé (A) à celui-ci ;
**caractérisé en ce que**
une surface de glissement (222a) de chacune de la pluralité de protubérances (222, 325, 522) est configurée pour être parallèle à la surface inclinée (221a) en section transversale par un plan contenant un axe central du dispositif d'étanchéité (10, 10X, 10Y) dans un état où une force externe n'agit pas sur la lèvre auxiliaire (221, 324, 521).

2. Dispositif d'étanchéité (10) selon la revendication 1, comprenant en outre :
un premier dispositif d'étanchéité (100) comprenant la lèvre principale (122) ; et
un second dispositif d'étanchéité (200) fixé par ajustement sur une surface intérieure du premier dispositif d'étanchéité (100) et comprenant la lèvre auxiliaire (221).

3. Dispositif d'étanchéité (10X) selon la revendication 1, dans lequel
la lèvre principale (322) et la lèvre auxiliaire (324) sont préparées d'un seul pièce.

4. Dispositif d'étanchéité (10Y) selon la revendication 1, comprenant en outre :
un premier dispositif d'étanchéité (400) comprenant la lèvre principale (422) ; et
un second dispositif d'étanchéité (500) configuré pour être fixé par ajustement sur une surface intérieure d'un trou d'arbre du boîtier (800) et comprenant la lèvre auxiliaire (521).
